# FASCICULE DE BREVET EUROPEEN

(11) **EP 3 895 108 B1**
(45) Date de publication et mention de la délivrance du brevet: **24.07.2024**
(21) Numéro de dépôt: 19759671.1
(22) Date de dépôt: 07.08.2019
(51) Int. Cl.: G06Q 20/34, G07F 7/08, G07F 7/12, G06F 21/62, G06F 21/84, H04L 9/00

(54) **DISPOSITIF ET PROCÉDÉ POUR SÉCURISER DES DONNÉES SÉCURITAIRES D'UNE CARTE DE PAIEMENT BANCAIRE**
VORRICHTUNG UND VERFAHREN ZUR SICHERUNG SICHERER DATEN FÜR EINE BANKBEZAHLKARTE
DEVICE AND METHOD FOR SECURING SECURE DATA FOR A BANK PAYMENT CARD

(30) Priorité: 11.12.2018 FR 1872665
(43) Date de publication de la demande: 20.10.2021
(73) Titulaire: CCS12, 13008 Marseille (FR)
(72) Inventeur: ABISDID, Charli, 13006 Marseille (FR); ABISDID, Marlène, 13006 Marseille (FR)
(74) Mandataire: Rhein, Alain
(86) Numéro de dépôt international: PCT/FR2019/051912
(87) Numéro de publication internationale: WO 2020/120849

(56) Documents cités:
- WO-A1-2008/028215
- FR-A1- 2 974 756
- US-A- 5 326 964
- US-A1- 2010 243 741
- US-A1- 2015 161 595
- US-B1- 6 826 281

## Description

### Domaine technique.

L'invention a pour objet un dispositif et un procédé de sécurisation des données sécuritaires d'une carte de paiement bancaire.

La présente invention concerne le domaine de la sécurisation des données généralement inscrites sur une face d'une carte de paiement bancaire en vue de sécuriser des opérations de paiement.

### Technique antérieure,

Des données sécuritaires associées à un compte bancaire sont apposées sur une carte de paiement, telles que le numéro de la carte, le nom du client, et sa date limite de validité, qui apparaissent généralement ainsi en relief, au recto (ou face avant) de ladite carte. Le code de sécurité ou cryptogramme visuel est apposé au verso (ou face arrière) de la carte. L'utilisateur doit habituellement fournir ces données sécuritaires lorsqu'il réalise une transaction en ligne ou par téléphone,

Ce mode de paiement est aujourd'hui très largement répandu. Toutefois, malgré les efforts des banques, des e-commerçants et autres entreprises spécialisées dans la sécurité des cartes bancaires, les fraudes par piratage en ligne ou par téléphone, ou tout simplement par vol physique de la carte et du téléphone, de ces données sécuritaires se sont également fortement développées. A un moindre degré, le piratage visuel des données sécuritaires, par exemple, lors d'un paiement direct auprès d'un commerçant est aussi pratiqué. Ce peut être le cas du paiement d'un achat dans un magasin où le vendeur copie les données sécuritaires à l'insu du titulaire de la carte. Le pirate peut alors effectuer des transactions à distance, pour son propre compte en utilisant ces données sécuritaires, au détriment du propriétaire de la carte, ou revendre ces données à un tiers.

Certains dispositifs ont été développés pour tenter de mieux sécuriser les données des cartes bancaires.

Les documents brevets FR3051581 ou US 2014/0279555 proposent par exemple des solutions où le cryptogramme n'est plus une donnée statique imprimée sur la carte, mais une donnée dynamique générée par la carte au moment de la confirmation d'une transaction bancaire. Ce type de carte est toutefois particulièrement complexe à réaliser et coûteux. En outre, en cas de vol de la carte, le cryptogramme, même généré de manière dynamique, sera visible par le voleur au moment de la confirmation d'une transaction bancaire frauduleuse. Le cryptogramme changeant protège les données stockées par le e-commerçants. En cas de piratage, cette solution est donc uniquement pertinente pour des cas de hameçonnage (phishing en anglais) consistant en un vol des données stockées chez le e-commerçant par un hacker.

Le document brevet FR3051060 divulgue un procédé de sécurisation de cryptogramme. Plusieurs cryptogrammes sont imprimés sur la carte, édités et reconnus par la banque. Ces cryptogrammes doivent être utilisés dans un ordre prédéfini. Un repère déplaçable manuellement par rapport aux cryptogrammes, permet au propriétaire de la carte, selon un protocole personnel, de mettre en mémoire la position du cryptogramme qu'il devra utiliser pour la transaction suivante. Si cette solution peut être intéressante sous certains égards, elle présente des inconvénients. En effet, en cas de vol de la carte, le voleur connaitra l'ensemble des cryptogrammes. Leur nombre étant limité, il suffit de « tester » successivement plusieurs cryptogrammes pour valider une transaction bancaire frauduleuse.

Le document US 2010/243741 divulgue un procédé de sécurisation conforme au préambule de la revendication principale. Les données occultées sont inscrites sur un support distinct de la carte. En combinant ce support à la carte, l'utilisateur peut retrouver l'ensemble des données sécuritaires. Le document US5326964 divulgue un procédé similaire. Ce type de procédé est relativement limité en termes de sécurisation.

Un objectif de l'invention est de remédier aux inconvénients de l'art antérieur. Un autre objectif de l'invention est de proposer une solution permettant de mieux sécuriser les données sécuritaires d'une carte de paiement et de la rendre inutilisable en cas de vol.

### Résumé de l'invention.

La solution proposée par l'invention est un procédé de sécurisation des données sécuritaires d'une carte de paiement bancaire associée à un compte bancaire, lesquelles données sécuritaires sont statiques et comportent le numéro de ladite carte, des données d'identification du titulaire de ladite carte, la date d'expiration de ladite carte, et un cryptogramme, lequel numéro de carte bancaire et lequel cryptogramme sont constitués de plusieurs chiffres et/ou lettres.

Ce procédé comporte les étapes consistant à :
- n'inscrire que partiellement les données sécuritaires de manière intelligible sur ladite carte de sorte que des données sécuritaires sont occultés, lesquelles données occultées étant formées par : plusieurs chiffres et/ou lettres du numéro de ladite carte et/ou au moins une donnée d'identification du titulaire et/ou au moins un élément de la date d'expiration et/ou au moins un chiffre et/ou lettre du cryptogramme,
- transmettre, au seul titulaire de la carte, un moyen de divulgation des données occultées.

Le procédé comporte en outre les étapes suivantes :
- cacher les données occultées, visibles sur la carte, parmi plusieurs données,
- arranger les données dans une grille,
- inscrire de manière visible la grille sur une face de la carte,
le moyen de divulgation des données occultées comportant un révélateur des données occultées, lequel révélateur se présente sous la forme virtuelle d'une image en réalité augmentée générée depuis une application informatique installée dans un terminal mobile du titulaire de la carte, laquelle image du révélateur est affichée sur un écran dudit terminal en se superposant à une image réelle de la grille également affichée sur ledit écran, l'image réelle de la carte étant capturée avec le moyen d'acquisition optique du terminal mobile, les données occultées étant préenregistrées dans la mémoire du terminal mobile.

Les données sécuritaires ne sont maintenant inscrites - de manière intelligible - que partiellement sur la carte de paiement bancaire. Aussi, si la carte venait à être dérobée, le voleur ne pourra jamais l'utiliser dans la mesure où il lui est impossible de connaitre l'ensemble des données sécuritaires. Seul le titulaire de la carte connaît ces données sécuritaires. L'invention vise ainsi à créer un sas de sécurité, notamment avant toute transaction sur internet. En effet, pour effectuer un achat sur internet, il est nécessaire de renseigner certaines données sécuritaires que seul le porteur de la carte sera capable de fournir. En cas de vol de la carte, l'arrangement des données dans la grille rend le nombre de combinaison à « tester» pour valider une transaction bancaire frauduleuse très largement supérieur aux solutions connues de l'art antérieur (environ 10.000 fois plus nombreuse). Ainsi, l'invention sécurise fortement les cartes de paiement, afin de les rendre inutilisable lorsqu'elles sont récupérées frauduleusement par des individus mal intentionnés.

D'autres caractéristiques avantageuses de l'invention sont listées ci-dessous, Chacune de ces caractéristiques peut être considérée seule ou en combinaison avec les caractéristiques remarquables définies ci-dessus, et faire l'objet, le cas échéant, d'une ou plusieurs demandes de brevet divisionnaires :
- Selon un mode de réalisation, le procédé comprend une étape consistant à générer l'image en réalité augmentée du révélateur sous la forme d'une image d'un cache dont la forme est complémentaire de l'image réelle de la grille et comportant une série de fenêtres laissant uniquement apparaitre l'image réelle des données occultés lorsque l'image dudit cache est superposée à l'image de ladite grille.
- Selon un mode de réalisation, l'image en réalité augmentée du révélateur est générée sous la forme d'une image mettant en exergue l'image réelle des données occultées lorsque ladite image en réalité augmentée est superposée à l'image de la grille.
- Avantageusement, le numéro de la carte est constitué de quatre séries de quatre chiffres, le procédé comprenant une étape consistant à occulter la deuxième et/ou la troisième série.
- Le procédé peut comprendre une étape consistant à ranger de manière aléatoire, ou de manière logique, les données occultées dans la grille.

Un autre aspect de l'invention concerne un dispositif de sécurisation des données sécuritaires d'une carte de paiement bancaire associée à un compte bancaire, lesquelles données sécuritaires sont statiques et comportent le numéro de ladite carte, des données d'identification du titulaire de ladite carte, la date d'expiration de ladite carte, et un cryptogramme, lequel numéro de carte bancaire et lequel cryptogramme sont constitués de plusieurs chiffres et/ou lettres. Le dispositif comprend également les caractéristiques suivantes :
- les données sécuritaires ne sont inscrites que partiellement de manière intelligible sur la carte de sorte que des données sécuritaires sont occultés, lesquelles données occultées étant formées par : plusieurs chiffres et/ou lettres du numéro de ladite carte et/ou au moins une donnée d'identification du titulaire et/ou au moins un élément de la date, d'expiration et/ou au moins un chiffre et/ou lettre du cryptogramme,
- le dispositif comporte un moyen de divulgation des données occultées.
- les données occultées sont visibles sur la carte et cachées parmi plusieurs données arrangées dans une grille, laquelle grille est inscrite de manière visible sur une face de la carte,
- le moyen de divulgation du dispositif comporte un révélateur des données occultées, lequel révélateur se présente sous la forme virtuelle d'une image en réalité augmentée générée depuis une application informatique installée dans un terminal mobile du titulaire de la carte, laquelle image du révélateur est affichée sur un écran dudit terminal en se superposant à une image réelle de la grille également affichée sur ledit écran, l'image réelle de la carte étant capturée avec le moyen d'acquisition optique du terminal mobile, les données occultées étant préenregistrées dans la mémoire du terminal mobile.

Selon un mode de réalisation, l'image en réalité augmentée du révélateur se présente sous la forme d'une image d'un cache dont la forme est complémentaire de l'image réelle de la grille et comportant une série de fenêtres laissant uniquement apparaître l'image réelle des données occultées lorsque l'image dudit cache est superposée à l'image de ladite grille.

Selon un mode de réalisation, l'image en réalité augmentée du révélateur se présente sous la forme d'une image mettant en exergue l'image réelle des données occultées lorsque ladite image en réalité augmentée est superposée à l'image de la grille.

Selon un mode de réalisation, la grille comporte plusieurs cases contenant chacune un chiffre compris entre O et 9, chaque chiffre étant représenté une ou plusieurs fois dans ladite grille.

### Brève description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
[Fig. 1a] est une vue du recto (face avant) d'une carte conforme à l'invention, selon un mode de réalisation non couvert par les revendications,
[Fig. 1b] est une vue du verso (face arrière) de la carte de la figure 1a,
[Fig. 2a] est une vue du recto d'une carte conforme à l'invention, selon un autre mode de réalisation non couvert par les revendications,
[Fig. 2b] est une vue du verso de la carte de la figure 2a,
[Fig. 3a] est une vue du recto d'une carte conforme à l'invention, selon un autre mode de réalisation non couvert par les revendications,
[Fig. 3b] est une vue du verso de la carte de la figure 3a,
[Fig. 4a] est une vue du recto d'une carte conforme à l'invention, selon un autre mode de réalisation non couvert par les revendications,
[Fig. 4b] est une vue du verso de la carte de la figure 4a,
[Fig. 5a] est une vue du recto d'une carte conforme à l'invention, selon un autre mode de réalisation couvert par les revendications,
[Fig. 5b] schématise un cache utilisé pour découvrir les données occultées dans la carte de la figure 5a,
[Fig. 5c] montre la carte de la figure 5a combinée au cache de la figure 5b,
[Fig. 5d] schématise un autre type révélateur utilisé pour découvrir les données occultées dans la carte de la figure 5a,
[Fig. 5e] montre la carte de la figure 5a combinée au révélateur de la figure 5d,
[Fig. 6a] est une vue de face d'un terminal mobile utilisé pour la mise en oeuvre du procédé selon un autre mode de réalisation couvert par les revendications,
[Fig. 6b] schématise une image réelle d'une carte de paiement bancaire affichée sur un écran du terminal mobile de la figure 6a,
[Fig. 6c] schématise une image virtuelle d'un révélateur affichée sur l'écran du terminal mobile de la figure 6b, laquelle image virtuelle est superposée à l'image réelle de la grille également affichée sur ledit écran,
[Fig. 6d] schématise une autre image virtuelle d'un révélateur affichée sur l'écran du terminal mobile de la figure 6b, laquelle image virtuelle est superposée à l'image réelle de la grille également affichée sur ledit écran.

### Description des modes de réalisation.

Les figures annexées représentent une carte de paiement 1, ou carte bancaire (CB). La carte 1 est associée au compte bancaire de son titulaire. Elle se présente de manière classique sous la forme d'une carte plastique mesurant environ 86 mm × 54 mm. Elle est équipée au recto d'une puce électronique 2 à contacts affleurant, et au verso, éventuellement d'une bande magnétique 3. la puce 2 et/ou la bande 3 permettent le paiement, auprès de commerces physiques possédant un terminal de paiement électronique ou auprès de commerce en ligne. Elle permet également des retraits d'espèces auprès de distributeurs automatiques de billets (DAB).

La carte 1 est associée à des données sécuritaires. Ces données sécuritaires sont statiques, en ce sens qu'elles sont fixes et n'évoluent pas dans le temps. De façon connue, les données sécuritaires comportent le numéro 4 de la carte 1, des données d'identification 5 du titulaire de ladite carte, la date d'expiration 6 de ladite carte, et un cryptogramme 7. Le numéro 4, les données d'identification 5 et la date d'expiration 6 sont typiquement inscrite au recto de la carte 1, tandis que le cryptogramme 7 est inscrit au verso de ladite carte. Le numéro 4 est constitué de plusieurs séries de chiffres, par exemple 4 séries de 4 chiffres, soit 16 chiffres au total. Le numéro 4 peut également être constitué de plusieurs chiffres non arrangés en série, d'un code alphanumérique (combinaison de chiffres et de lettres), ou d'une série de lettres. Les données d'identification 5 comprennent typiquement le nom et le prénom du titulaire de la carte, ou le nom d'une société titulaire du compte bancaire associé à la carte 1. La date 6 est constituée de deux éléments, typiquement le mois d'expiration à deux chiffres (ex: 02 pour février) et l'année d'expiration à deux chiffres (ex: 25 pour 2025). Bien évidemment, le mois et/ou l'année pourrait être constituées de plus ou moins de chiffres et être associés à des lettres. Le cryptogramme 7 est constitué de plusieurs chiffres, typiquement 3 chiffres (ex: 432), mais peut être constitué d'un nombre supérieur (par exemple 4 chiffres) au inférieur (par exemple 2 chiffres). Le cryptogramme 7 peut également être constitué de chiffre(s) et/ou de lettre(s).

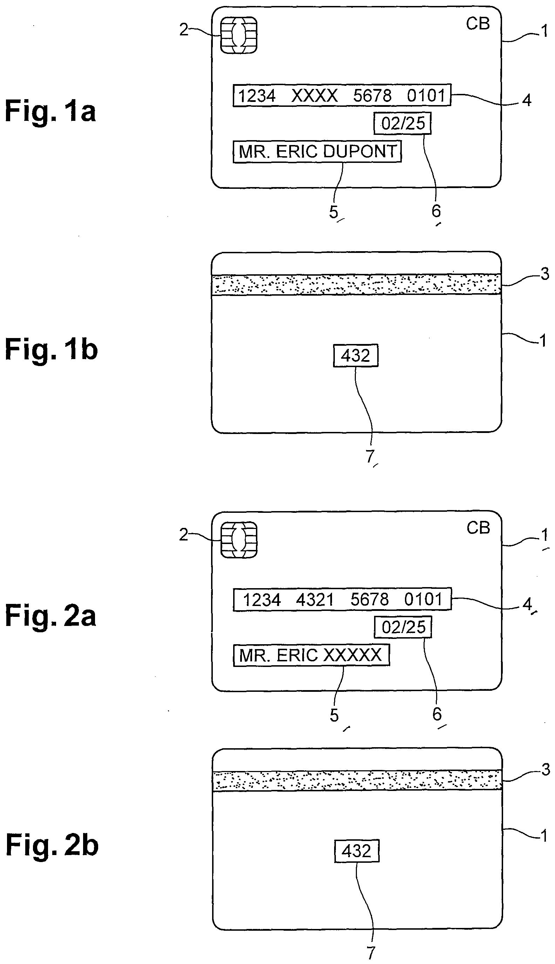

Sur les figures 1a et 1b, on sécurise les données sécuritaires en n'inscrivant que partiellement sur la carte 1, le numéro 4. Au moins une série de chiffres est ici occultée de sorte qu'elle n'est jamais visible sur la carte 1. On occulte préférentiellement la deuxième et/ou la troisième série dans la mesure où la première série peut être commune à plusieurs cartes de paiement et la quatrième série apparaît généralement sur les tickets de caisse. Toutes les séries peuvent également être occultées. Les chiffres (et/ou lettres) occultés peuvent être remplacés par des croix (XXXX), des points, des tirets, etc. La deuxième et la troisième série peuvent être occultées en même temps. On peut également envisager d'occulter un chiffre dans chaque série, de sorte qu'aucune des séries n'est inscrite complètement sur la carte 1.

Sur les figures 2a et 2b, on sécurise les données sécuritaires en n'inscrivant que partiellement sur la carte 1, l'identifiant 5 du titulaire. Le nom du titulaire (DUPONT) est ici occulté de sorte que seul le prénom (ERIC) est visible sur la carte 1. On peut également occulter le prénom de sorte qu'il ne soit jamais visible, seul le nom étant inscrit. On peut encore occulter le nom et le prénom du titulaire. Les données occultées peuvent être remplacées par des croix (XX.XX), des points, des tirets, etc. Il est avantageux de pouvoir identifier le titulaire de la carte 1, alors même que le nom et/ou le prénom du titulaire sont occultés. Pour ce faire, le numéro de la carte d'identité ou de passeport du titulaire, peuvent être inscrit sur la carte 1. Un commerçant voulant s'assurer que la carte 1 appartient bien à son titulaire, pourra alors demander à ce dernier sa carte d'identité ou son passeport.

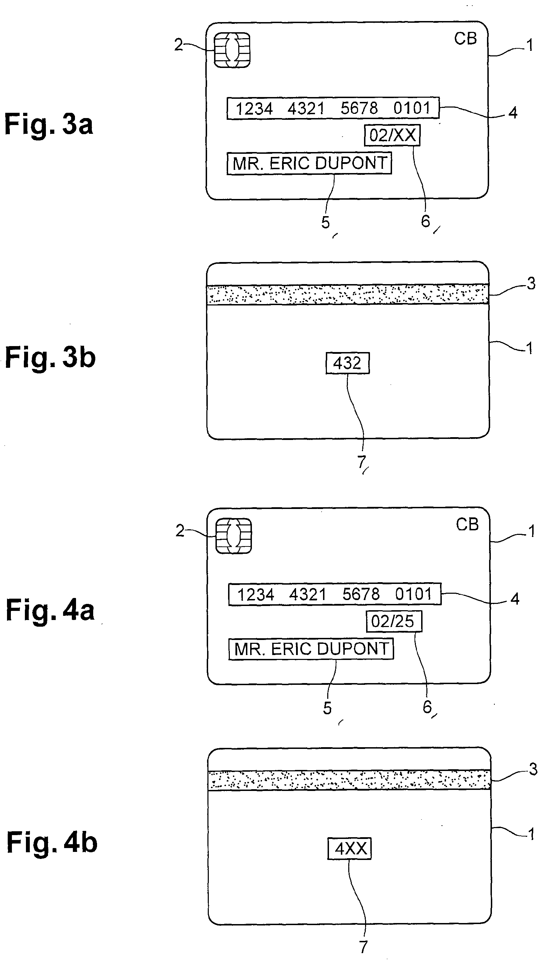

Sur les figures 3a et 3b, on sécurise les données sécuritaires en n'inscrivant que partiellement sur la carte 1, la date d'expiration 6. L'année est ici occultée de sorte qu'elle n'est jamais visible. Seul le mois est inscrit. On peut également occulter le mois de sorte qu'il ne soit jamais visible, seule l'année étant inscrite. On peut encore occulter le mois et l'année d'expiration. Les données occultées peuvent être remplacées par des croix (X.XXX), des points, des tirets, etc.

Sur les figures 4a et 4b, on sécurise les données sécuritaires en n'inscrivant que partiellement sur la carte 1, le cryptogramme 7. Au moins un chiffre (et/ou lettre), avantageusement 2 chiffres (et/ou lettres) et préférentiellement l'ensemble des chiffres (et/ou lettres) du cryptogramme sont occultés. Les chiffres (et/ou lettres) occultés peuvent être remplacés par des croix (XX.XX), des points, des tirets, etc.

Les modes de réalisations décrits précédemment peuvent se combiner, en ce sens qu'on peut occulter simultanément plusieurs éléments de données sécuritaires. Par exemple, on peut occulter tout ou partie du numéro 4 et tout ou partie du cryptogramme 7. On peut également occulter tout ou partie du numéro 4 et tout ou partie de la date d'expiration 6. Toutes les combinaisons possibles sont couvertes par la présente invention.

Dans la suite de la description, les éléments occultés des données sécuritaires sont dénommées « données occultées ». Les données sécuritaires de la carte 1 peuvent être enregistrées dans la puce 2 et/ou dans la bande magnétique 3. Pour éviter tout piratage, on prévoit préférentiellement de supprimer les données occultées de la puce 2 et/ou de la bande magnétique 3.

On communique au seul titulaire de la carte, un moyen de divulgation de ces données occultées. Ce moyen de divulgation peut consister en un document transmis par voie postale au titulaire de la carte 1 et sur lequel sont imprimées les données occultées. Pour sécuriser la communication des données occultées, ce document peut être un document scellé, envoyé dans un courrier distinct, ou joint à celui de l'envoi de la carte 1. Il peut s'agir du même document sur lequel est imprimé le code secret de la carte 1 (généralement un code à 4 chiffres) permettant de retirer de l'argent aux distributeurs et payer des commerçants. Le titulaire pourra alors mémoriser ou enregistrées ces données occultées qui seront connues de lui seul.

Pour retirer de l'argent aux distributeurs et payer des commerçants, le titulaire utilisera de manière classique le code secret de la carte 1. Pour des achats en lignes, il lui suffira de compléter les données sécuritaires requises par les données occultées. Ainsi, si le titulaire se fait dérober sa carte 1, le voleur ne pourra pas l'utiliser pour des achats frauduleux en ligne ou par téléphone, dans la mesure où il ne connaîtra jamais les données occultées. Le niveau de sécurité conféré par l'invention est tel qu'elle peut se substituer à l'authentification SMS-OTP généralement utilisée pour sécuriser les paiements en ligne. Le procédé d'authentification SMS-OTP est largement répandu et consiste à envoyer sur le téléphone mobile du titulaire, un SMS (pour Short Message Service) incluant un code à usage unique (OTP ou « One Time Password »). Ce code à usage unique doit être renseigné en plus des données sécuritaires pour valider une transaction en ligne.

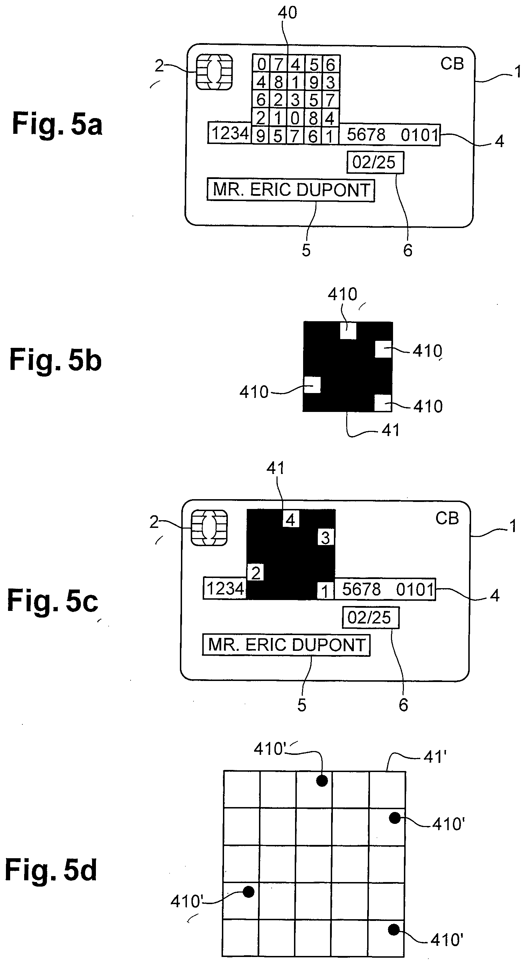

Les figures 5a, Sb et Sc illustrent un mode de réalisation de l'invention couvert par les revendications. Sur la figure 5a, les données occultées correspondent à la deuxième série de chiffres du numéro 4. Les chiffres occultés sont visibles mais cachés parmi plusieurs chiffres arrangés dans une grille 40. La grille 40 est préférentiellement imprimée ou inscrite de manière visible sur le recto de la carte 1, au niveau du numéro 4 pour en simplifier l'usage. Elle pourrait toutefois être imprimée au verso.

Sur la figure 5a, la grille 40 comporte 25 cases contenant chacune un chiffre compris entre O et 9. la grille 40 peut avoir un nombre supérieur de cases, par exemple 100 cases contenant chacune un chiffre compris entre O et 9, chaque chiffre étant représenté 10 fois. La grille 40 peut également avoir un nombre inférieur de cases, par exemple 10 cases contenant chacune un chiffre compris entre O et 9, chaque chiffre étant représenté une seule fois Les chiffres peuvent être disposés de manière aléatoire dans la grille 40, ou au contraire rangés de manière logique. La grille 40 est préférentiellement constituée de lignes et de colonnes. Le nombre de lignes est compris entre O et 10 et le nombre de colonne également compris entre O et 1O. La grille 40 peut également être constituée d'un ou plusieurs cercles quadrillés concentriques dans lequel sont disposés les chiffres. Bien évidemment, si les données occultées du numéro 4 comporte des lettres, ces lettres pourront être intégrées dans la grille 40.

En se rapportant à la figure 5b, on fournit au titulaire un révélateur permettant de révéler les données occultées, c'est-à-dire les chiffres manquants du numéro 4, dans la grille 40. Selon une configuration donnée à titre d'exemple mais non couverte par les revendications, ce révélateur se présente sous la forme matérielle d'un cache 41 ayant une forme complémentaire de la grille 40 et comportant une série de fenêtre 410 transparentes ou ajourées. Hormis les fenêtres 410, le reste du cache est opaque. Le cache 41 peut être transmis dans un document scellé, envoyé dans un courrier distinct, ou joint à celui de l'envoi de la carte 1.

En se rapportant à la figure 5c, lorsque le cache 41 est positionné par-dessus la grille 40, ou, en d'autres termes, qu'il coopère avec ladite grille, les fenêtres 410 laissent apparaître les chiffres occultés du numéro 4. L'association cache/grille s'apparente à la technique de cryptographie par grille de Cardan. Dans l'exemple illustré, la série 4321 est révélée, laquelle série correspondant aux données initialement occultées. Le titulaire pourra alors mémoriser ou enregistrer ces données occultées qui seront connues de lui seul. S'il ne se souvient pas des données occultées, le titulaire pourra également réutiliser le cache 41 pour les faire réapparaître.

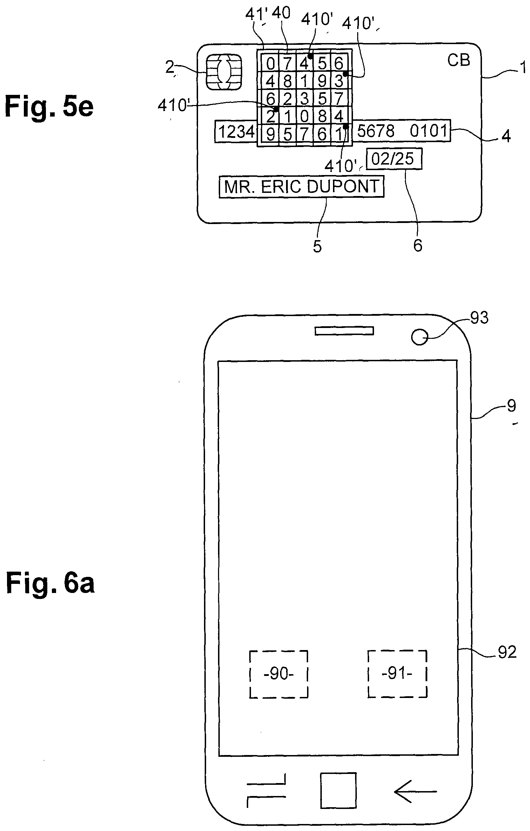

Dans la variante de réalisation de la figure 5d, également fournie à titre d'exemple et non couverte par les revendications, le révélateur se présente sous la forme matérielle d'un support 41' transparent ayant une forme complémentaire de la grille 40. Ce support transparent 41' est par exemple réalisé en plastique. Il comporte des éléments graphiques 41O' agencés et configurés pour mettre en exergue les données occultées lorsque ledit support est superposé à la grille 40. Sur la figure 5d, ces éléments graphiques 410' se présentent sous la forme de points positionnés sur la surface du support 41'. En se rapportant à la figure 5e, lorsque le support 41' est positionné par-dessus la grille 40, les points sont positionnés dans les carreaux de ladite grille dans laquelle sont positionnées les données occultées du numéro 4. Les éléments graphiques 41O' permettent donc de révéler uniquement les données occultées.

Les éléments graphiques 41O' ne se présentent pas nécessairement sous la forme de points mais peuvent se présenter sous une autre forme, par exemple sous la forme d'une série de cercles entourant les chiffres 4-3-2-1 de la série occultés lorsque le support 41' coopère avec la grille 41.

Le support 41' peut être pourvu d'une marque indiquant la face à positionner contre la grille 40. De même, sur la figure 5d, le support 41' comprend de manière optionnelle une grille similaire à la grille 40, pour faciliter la mise en position dudit support sur ladite grille en faisant coïncider lesdites grilles.

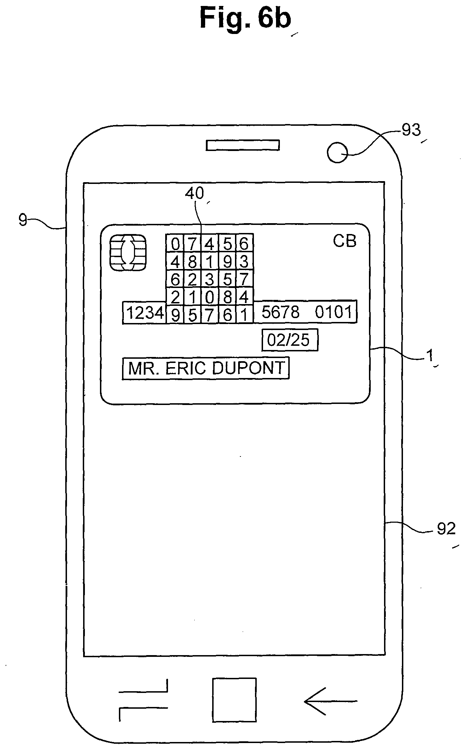

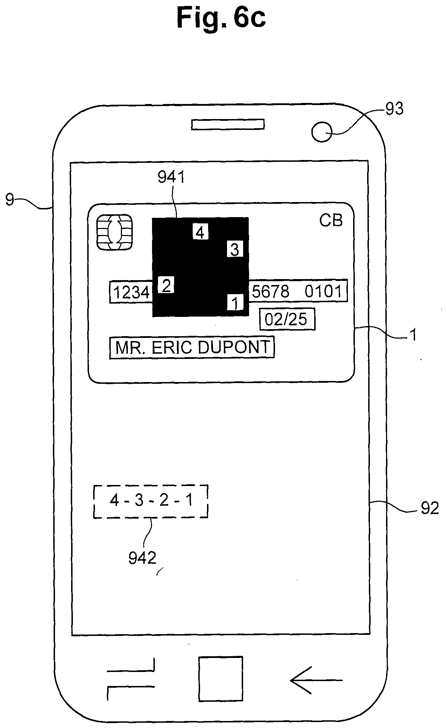

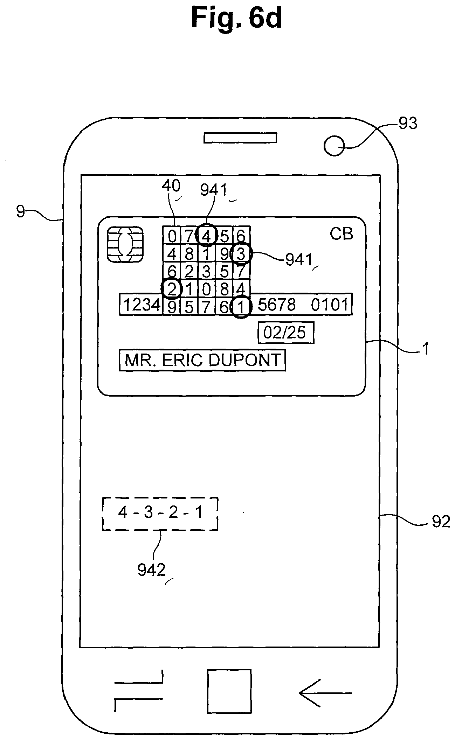

Les figures 6a, 6b, 6c et 6d illustrent un autre mode de réalisation de l'invention couvert par les revendications. Les données occultées correspondent à la deuxième série de chiffres du numéro 4. Les chiffres occultés sont visibles mais cachés parmi plusieurs chiffres arrangés dans une grille 40 comme dans le mode de réalisation des figures 5a à 5c.

La mise en oeuvre du procédé selon ce mode de réalisation fait appel à l'utilisation d'un terminal mobile 9 (figure 6a) se présentant préférentiellement sous la forme d'un téléphone mobile ou Smartphone du type iPhone^{®}, Samsung Galaxy^{®}, ou sous la forme d'un autre terminal électronique, fonctionnant avec un système d'exploitation de type Windows, Mac, iOS, Android, etc. Le terminal mobile 9 est celui du titulaire (utilisateur) de la carte 1,

Le terminal mobile 9 comprend notamment, et de manière classique, un ou plusieurs processeurs ou microprocesseurs 90, une ou plusieurs mémoires 91, une interface graphique 92 et un moyen d'acquisition optique 93, qui sont mutuellement connectés via un bus commun. Une ou plusieurs applications informatiques - ou programmes informatiques - sont stockées dans la ou les mémoires 91 et dont les instructions (ou codes), lorsqu'elles sont exécutées par le ou les processeurs 90 permettent de réaliser les fonctionnalités décrites plus avant dans la description.

Les données sécuritaires de la carte 1, et a minima les données occultées, sont préférentiellement préenregistrées dans la mémoire 90. Si l'utilisateur possède plusieurs cartes bancaires, les données sécuritaires de chaque carte, et a minima leurs données occultées sont préenregistrées dans la mémoire 90. Il est a noté que la mémoire 91 peut être une mémoire native du terminal 9, ou une mémoire déportée, par exemple intégrée dans un serveur informatique physiquement distant dudit terminal.

L'interface graphique 92 offre à l'utilisateur la possibilité de saisir, sélectionner et/ou entrer des données ou des instructions, et d'afficher des images acquises par le moyen d'acquisition optique 93. Il se présente par exemple sous la forme d'un écran tactile, d'un écran connecté à un clavier, etc.

Le moyen d'acquisition optique 93 se présente avantageusement sous la forme d'un lecteur optique, du type caméra et/ou appareil photo intégré dans le terminal mobile 9. Ce moyen d'acquisition optique 93 est associé à une application informatique de lecture.

L'utilisateur peut être amené à installer une application informatique dans son terminal mobile 9 pour mettre en oeuvre tout ou partie de l'invention depuis ledit terminal et notamment l'affichage d'images en réalité augmentée. Cette application informatique peut être préinstallée sur le terminal 9. L'utilisateur a toutefois la possibilité de rechercher cette applications informatiques sur une boutique en ligne telles que Google Play^{®}, Itunes^{®} ou sur un site internet dédié, et ensuite la téléchargée sur son termina! 9.

Par souci de clarté, il faut comprendre au sens de l'invention que « *le terminal 9 fait quelque* chose » signifie « *l'application informatique exécutée par le processeur ou microprocesseur 90 du terminal 9 fait quelque chose».* Tout comme « *l'application informatique fait quelque* chose » signifie « *l'application informatique exécutée par le processeur ou microprocesseur 90 du terminal 9 fait quelque chose* ».

En se rapportant à la figure 6b, l'utilisateur ouvre son application de lecture depuis son terminal mobile 9 et capture tout ou partie de l'image de la carte 1 avec le moyen d'acquisition optique 93. L'image réelle de la carte 1 s'affiche alors sur l'interface graphique 92 du terminal 9.

Le terminal 9, au moyen d'une application de reconnaissance visuelle telle que Google Lens^{®}, reconnait que l'objet photographié est une carte bancaire et que cette carte comporte la grille 40.

Sur la base d'une reconnaissance optique de caractères de type OCR (acronyme de l'anglais Optical Character Récognition), le terminal 9 va analyser l'image de la grille 40 et plus particulièrement les chiffres qui y sont arrangés.

Le terminal 9 va rechercher dans la mémoire 91 les données occultées (ex: la série 4321) et rechercher dans l'image de la grille 40 ces données (ex chacun des chiffre 4-3-2-1).

Le terminal 9 va alors générée une image en réalité augmentée du révélateur et affichée cette image virtuelle sur l'écran 92 en la superposant à l'image réelle de la grille 40.

Sur la figure 6c, l'image en réalité augmentée du révélateur se présente sous la forme d'une image d'un cache 941 dont la forme est complémentaire de l'image réelle de la grille 40. L'image du cache 941 comporte ici une série de fenêtres laissant uniquement apparaître l'image réelle des données occultés lorsque l'image dudit cache est superposée à l'image de ladite grille. Dans l'exemple sur la figure 6c, la série 4321 est révélée par l'image virtuelle du cache 941, laquelle série correspondant aux données initialement occultées.

Sur la figure 6d, l'image en réalité augmentée du révélateur se présente sous la forme d'une image 941 mettant en exergue l'image réelle des données occultées lorsque ladite image en réalité augmentée est superposée à l'image de la grille 40. Cette image virtuelle est ici une série de cercles entourant l'image des chiffres 4-3-2-1 de la série occultés. Ces chiffres peuvent toutefois être mis en exergue d'une autre façon, par exemple par une mise en surbrillance, ou avec un grossissement, ou en floutant les autres chiffres inscrits dans la grille 40, etc.

En tout état de cause, l'image virtuelle générée peut inclure les données occultées qui s'affiche dans une zone graphique dédiée 942.

Le système de grille et cache décrit en référence aux figures 5a, 5b, 5c, 6b, 6c, 6d s'applique de manière similaire aux données d'identification 5 (nom et/ou prénom du titulaire, auquel cas la grille 40 comporte une série de lettres), à la date d'expiration 6 et/ou au cryptogramme 7 et/ou le numéro de la carte d'identité ou de passeport du titulaire, ... , dans le cas où les données occultées font parties de ces éléments.

## Revendications

1. Procédé de sécurisation des données sécuritaires d'une carte de paiement bancaire (1) associée à un compte bancaire, lesquelles données sécuritaires sont statiques et comportent le numéro (4) de ladite carte, des données d'identification (5) du titulaire de ladite carte, la date d'expiration (6) de ladite carte, et un cryptogramme (7), lequel numéro de carte bancaire et lequel cryptogramme sont constitués de plusieurs chiffres et/ou lettres, ledit procédé comportant les étapes consistant à :
- n'inscrire que partiellement les données sécuritaires de manière intelligible sur ladite carte de sorte que des données sécuritaires sont occultés, lesquelles données occultées étant formées par: plusieurs chiffres et/ou lettres du numéro (4) de ladite carte et/ou au moins une donnée d'identification (5) du titulaire et/ou au moins un élément de la date, d'expiration (6) et/ou au moins un chiffre et/ou lettre du cryptogramme (7),
- transmettre, au seul titulaire de la carte (1), un moyen de divulgation (41) des données occultées,
- cacher les données occultées, visibles sur la carte, parmi plusieurs données,
**caractérisé en ce que** le procédé comporte les étapes suivantes :
- arranger les données dans une grille (40),
- inscrire de manière visible la grille (40) sur une face de la carte (1), le moyen de divulgation (41) des données occultées comportant un révélateur des données occultées, lequel se présente sous la forme virtuelle d'une image en réalité augmentée générée depuis une application informatique installée dans un terminal mobile (90) du titulaire de la carte (1), laquelle image du révélateur est affichée sur un écran dudit terminal en se superposant à une image réelle de la grille (40) également affichée sur ledit écran, l'image réelle de la carte étant capturée avec le moyen d'acquisition optique du terminal mobile (90), les données occultées étant préenregistrées dans la mémoire du terminal mobile (90).

2. Procédé selon la revendication 1, consistant à générer l'image en réalité augmentée du révélateur sous la forme d'une image d'un cache (41') dont la forme est complémentaire de l'image réelle de la grille (40) et comportant une série de fenêtres (410') laissant uniquement apparaître l'image réelle des données occultés lorsque l'image dudit cache est superposée à l'image de ladite grille.

3. Procédé selon la revendication 1, consistant à générer l'image en réalité augmentée du révélateur sous la forme d'une image mettant en exergue l'image réelle des données occultées lorsque ladite image en réalité augmentée est superposée à l'image de la grille (40).

4. Procédé selon l'une des revendications précédentes, dans lequel le numéro (4) de la carte est constitué de quatre séries de quatre chiffres, le procédé comprenant une étape consistant à occulter la deuxième et/ou la troisième série.

5. Procédé selon l'une des revendications 1 à 4, comprenant une étape consistant à ranger de manière aléatoire les données occultées dans la grille (40).

6. Procédé selon l'une des revendications 1 à 4, comprenant une étape consistant à ranger de manière logique les données occultées dans la grille (40).

7. Dispositif de sécurisation des données sécuritaires d'une carte de paiement bancaire (1) associée à un compte bancaire, lesquelles données sécuritaires sont statiques et comportent le numéro (4) de ladite carte, des données d'identification (5) du titulaire de ladite carte, la date d'expiration (6) de ladite carte, et un cryptogramme (7), lequel numéro de carte bancaire et lequel cryptogramme sont constitués de plusieurs chiffres et/ou lettres, et dans lequel :
- ne sont inscrites que partiellement de manière intelligible sur la carte (1) de sorte que des données sécuritaires sont occultés, lesquelles données occultées étant formées par: plusieurs chiffres et/ou lettres du numéro (4) de ladite carte et/ou au moins une donnée d'identification (5) du titulaire et/ou au moins un élément de la date, d'expiration (6) et/ou au moins un chiffre et/ou lettre du cryptogramme (7),
- le dispositif comporte un moyen de divulgation (41) des données occultées,
- les données occultées sont visibles sur la carte et cachées parmi plusieurs données arrangées dans une grille (40), laquelle grille est inscrite de manière visible sur une face de la carte (1),
- le moyen de divulgation (41) du dispositif comporte un révélateur des données occultées, lequel révélateur se présente sous la forme virtuelle d'une image en réalité augmentée générée depuis une application informatique installée dans un terminal mobile (9) du titulaire de la carte (1), laquelle image du révélateur est affichée sur un écran dudit terminal en se superposant à une image réelle de la grille (40) également affichée sur ledit écran, l'image réelle de la carte étant capturée avec le moyen d'acquisition optique (93) du terminal mobile (90), les données occultées étant préenregistrées dans la mémoire (91) du terminal mobile (90).

8. Dispositif selon la revendication 7, dans lequel l'image en réalité augmentée du révélateur se présente sous la forme d'une image d'un cache (41') dont la forme est complémentaire de l'image réelle de la grille (40) et comportant une série de fenêtres (410') laissant uniquement apparaître l'image réelle des données occultées lorsque l'image dudit cache est superposée à l'image de ladite grille.

9. Dispositif selon la revendication 7, dans lequel l'image en réalité augmentée du révélateur se présente sous la forme d'une image mettant en exergue l'image réelle des données occultées lorsque ladite image en réalité augmentée est superposée à l'image de la grille (40).

10. Dispositif selon l'une des revendications 7 à 9, dans lequel la grille (40) comporte plusieurs cases contenant chacune un chiffre compris entre 0 et 9.

11. Dispositif selon la revendication 10, dans lequel chaque chiffre est représenté plusieurs fois dans la grille (40).

12. Dispositif selon la revendication 10, dans lequel chaque chiffre est représenté une seule fois dans la grille (40).

13. Dispositif selon l'une des revendications 7 à 9, dans lequel les données occultées appartiennent à un numéro de carte d'identité ou passeport du titulaire de la carte (1), inscrit sur ladite carte.

## Patentansprüche

1. Verfahren zum Sichern von Sicherheitsdaten einer mit einem Bankkonto verbundenen Bankzahlungskarte (1), wobei die Sicherheitsdaten statisch sind und die Kartennummer (4), Identifikationsdaten (5) des Inhabers der Karte, das Ablaufdatum (6) der Karte und ein Kryptogramm (7) umfassen, wobei die Bankkartennummer und das Kryptogramm aus mehreren Zahlen und/oder Buchstaben bestehen, das Verfahren umfassend die Schritte, bestehend aus:
- einem nur teilweise verständlichen Beschriften der Karte mit Sicherheitsdaten, sodass die Sicherheitsdaten versteckt werden, wobei die versteckten Daten ausgebildet werden durch: mehrere Zahlen und/oder Buchstaben der Kartennummer (4) und/oder mindestens eine Identifikationsdateneinheit (5) des Inhabers und/oder mindestens ein Element des Ablaufdatums (6) und/oder mindestens eine Zahl und/oder einen Buchstaben des Kryptogramms (7),
- einem Übermitteln, dem alleinigen Inhaber der Karte (1), eines Mittels zur Offenlegung (41) der versteckten Daten,
- einem Verbergen der versteckten Daten, die auf der Karte sichtbar sind, unter mehreren Daten, **dadurch gekennzeichnet, dass** das Verfahren die folgenden Schritte umfasst:
- Einrichten der Daten in einem Gitter (40),
- sichtbares Beschriften des Gitters (40) auf einer Seite der Karte (1), wobei das Mittel (41) zum Offenlegen der versteckten Daten eine Einrichtung zum Offenbaren der versteckten Daten umfasst, die in der virtuellen Form eines Bilds einer erweiterten Realität vorliegt, das von einer Computeranwendung, die in einem mobilen Endgerät (90) des Karteninhabers (1) installiert ist, erzeugt wird, wobei das Bild der Offenbarungseinrichtung auf einem Bildschirm des Endgeräts bei einem Überlagern eines realen Bilds des Gitters (40) angezeigt wird, das ebenfalls auf dem Bildschirm angezeigt wird, wobei das reale Bild der Karte mit dem optischen Erfassungsmittel des mobilen Endgeräts (90) aufgenommen wird, wobei die versteckten Daten in dem Speicher des mobilen Endgeräts (90) vorab abgespeichert werden.

2. Verfahren nach Anspruch 1, bestehend aus dem Erzeugen des Bilds der erweiterten Realität der Offenbarungseinrichtung in Form eines Bilds einer Abdeckung (41'), deren Form komplementär zu dem realen Bild des Gitters (40) ist, und umfassend eine Reihe von Fenstern (410'), die das reale Bild der versteckten Daten nur erscheinen lassen, wenn das Bild der Abdeckung das Bild des Gitters überlagert.

3. Verfahren nach Anspruch 1, bestehend aus dem Erzeugen des Bilds der erweiterten Realität der Offenbarungseinrichtung in Form eines Bilds, das das reale Bild der versteckten Daten hervorhebt, wenn das Bild der erweiterten Realität das Bild des Gitters (40) überlagert.

4. Verfahren nach einem der vorstehenden Ansprüche, wobei die Kartennummer (4) aus vier Reihen von vier Ziffern besteht, wobei das Verfahren einen Schritt aufweist, bestehend aus dem Verstecken der zweiten und/oder der dritten Reihe.

5. Verfahren nach einem der Ansprüche 1 bis 4, das einen Schritt aufweist, bestehend aus einem zufälligen Anordnen der versteckten Daten in dem Gitter (40).

6. Verfahren nach einem der Ansprüche 1 bis 4, das einen Schritt aufweist, bestehend aus einem logischen Anordnen der versteckten Daten in dem Gitter (40).

7. Vorrichtung zum Sichern von Sicherheitsdaten einer mit einem Bankkonto verbundenen Bankzahlungskarte (1), wobei die Sicherheitsdaten statisch sind und die Kartennummer (4), Identifikationsdaten (5) des Inhabers der Karte, das Ablaufdatum (6) der Karte und ein Kryptogramm (7) umfassen, wobei die Bankkartennummer und das Kryptogramm aus mehreren Zahlen und/oder Buchstaben bestehen, und wobei:
- die Karte (1) nur teilweise verständlich beschriftet ist, sodass die Sicherheitsdaten versteckt werden, wobei die versteckten Daten ausgebildet werden durch: mehrere Zahlen und/oder Buchstaben der Kartennummer (4) und/oder mindestens eine Identifikationsdateneinheit (5) des Inhabers und/oder mindestens ein Element des Ablaufdatums (6) und/oder mindestens eine Zahl und/oder einen Buchstaben des Kryptogramms (7),
- die Vorrichtung ein Mittel (41) zum Offenlegen der versteckten Daten umfasst,
- die versteckten Daten auf der Karte sichtbar und unter mehreren in einem Gitter (40) eingerichteten Daten verborgen sind, wobei die Karte (1) auf einer Seite mit dem Gitter sichtbar beschriftet ist,
- das Offenlegungsmittel (41) der Vorrichtung eine Einrichtung zum Offenbaren der versteckten Daten umfasst, wobei die Offenbarungseinrichtung in der virtuellen Form eines Bilds einer erweiterten Realität vorliegt, das von einer Computeranwendung, die in einem mobilen Endgerät (9) des Karteninhabers (1) installiert ist, erzeugt wird, wobei das Bild der Offenbarungseinrichtung auf einem Bildschirm des Endgeräts bei einem Überlagern eines realen Bilds des Gitters (40) angezeigt wird, das ebenfalls auf dem Bildschirm angezeigt wird, wobei das reale Bild der Karte mit dem optischen Erfassungsmittel (93) des mobilen Endgeräts (90) aufgenommen wird, wobei die versteckten Daten in dem Speicher (91) des mobilen Endgeräts (90) vorab abgespeichert werden.

8. Vorrichtung nach Anspruch 7, wobei das Bild der erweiterten Realität der Offenbarungseinrichtung in Form eines Bilds einer Abdeckung (41') vorliegt, deren Form komplementär zu dem realen Bild des Gitters (40) ist, und umfassend eine Reihe von Fenstern (410'), die das reale Bild der versteckten Daten nur erscheinen lassen, wenn das Bild der Abdeckung das Bild des Gitters überlagert.

9. Vorrichtung nach Anspruch 7, wobei das Bild der erweiterten Realität der Offenbarungseinrichtung in Form eines Bilds vorliegt, das das reale Bild der versteckten Daten hervorhebt, wenn das Bild der erweiterten Realität das Bild des Gitters (40) überlagert.

10. Vorrichtung nach einem der Ansprüche 7 bis 9, wobei das Gitter (40) mehrere Felder umfasst, die jeweils eine Zahl zwischen 0 und 9 enthalten.

11. Vorrichtung nach Anspruch 10, wobei jede Zahl in dem Gitter (40) mehrfach dargestellt ist.

12. Vorrichtung nach Anspruch 10, wobei jede Zahl ein einziges Mal in dem Gitter (40) dargestellt ist.

13. Vorrichtung nach einem der Ansprüche 7 bis 9, wobei die versteckten Daten zu einer Personalausweis- oder Reisepassnummer des Karteninhabers (1) gehören, mit der die Karte beschriftet ist.

## Claims

1. Method for securing the security data of a bank payment card (1) associated with a bank account, which security data are static and comprise the number (4) of said card, identification data (5) of the holder of said card, the expiry date (6) of said card, and a cryptogram (7), which bank card number and which cryptogram are made up of multiple digits and/or letters, said method comprising the steps of:
- only partially inscribing the security data in an intelligible manner on said card so that security data are concealed, said concealed data being formed by: multiple digits and/or letters of the number (4) of said card and/or at least one piece of identification data (5) of the cardholder and/or at least one element of the expiry date (6) and/or at least one digit and/or letter of the cryptogram (7),
- transmitting, to the holder of the card (1) only, a means (41) for disclosing the concealed data,
- hiding the concealed data, which are visible on the card, among multiple pieces of data, **characterized in that** the method comprises the following steps:
- arranging the data in a grid (40),
- visibly inscribing the grid (40) on one face of the card (1), the means (41) for disclosing the concealed data comprising a concealed-data revealer, which takes the virtual form of an augmented reality image generated from a computer application installed on a mobile terminal (90) of the holder of the card (1), which revealer image is displayed on a screen of said terminal, superimposed on a real image of the grid (40) which is also displayed on said screen, the real image of the card being captured by the optical acquisition means of the mobile terminal (90), the concealed data being pre-recorded in the memory of the mobile terminal (90).

2. Method according to claim 1, consisting in generating the augmented reality image of the revealer in the form of an image of a mask (41'), the shape of which matches the real image of the grid (40) and which comprises a series of windows (410') revealing the real image of the concealed data only when the image of said mask is superimposed on the image of said grid.

3. Method according to claim 1, consisting in generating the augmented reality image of the revealer in the form of an image which highlights the real image of the concealed data when said augmented reality image is superimposed on the image of the grid (40).

4. Method according to one of the preceding claims, wherein the card number (4) consists of four series of four digits, the method comprising a step of concealing the second and/or third series.

5. Method according to one of claims 1 to 4, comprising a step of randomly arranging the concealed data in the grid (40).

6. Method according to one of claims 1 to 4, comprising a step of logically arranging the concealed data in the grid (40).

7. Device for securing the security data of a bank payment card (1) associated with a bank account, which security data are static and comprise the number (4) of said card, identification data (5) of the holder of said card, the expiry date (6) of said card, and a cryptogram (7), which bank card number and which cryptogram are made up of multiple digits and/or letters, and wherein:
- the data are only partially inscribed in an intelligible manner on the card (1) so that security data are concealed, said concealed data being formed by: multiple digits and/or letters of the number (4) of said card and/or at least one piece of identification data (5) of the cardholder and/or at least one element of the expiry date (6) and/or at least one digit and/or letter of the cryptogram (7),
- the device comprises a means (41) for disclosing the concealed data,
- the concealed data are visible on the card and hidden among multiple pieces of data arranged in a grid (40), which grid is visibly inscribed on one face of the card (1),
- the disclosure means (41) of the device comprises a concealed-data revealer, which revealer takes the virtual form of an augmented reality image generated from a computer application installed on a mobile terminal (9) of the holder of the card (1), which revealer image is displayed on a screen of said terminal, superimposed on a real image of the grid (40) which is also displayed on said screen, the real image of the card being captured by the optical acquisition means (93) of the mobile terminal (90), the concealed data being pre-recorded in the memory (91) of the mobile terminal (90).

8. Device according to claim 7, wherein the augmented reality image of the revealer is in the form of an image of a mask (41'), the shape of which matches the real image of the grid (40) and which comprises a series of windows (410') revealing the real image of the concealed data only when the image of said mask is superimposed on the image of said grid.

9. Device according to claim 7, wherein the augmented reality image of the revealer is in the form of an image which highlights the real image of the concealed data when said augmented reality image is superimposed on the image of the grid (40).

10. Device according to one of claims 7 to 9, wherein the grid (40) comprises a plurality of cells each containing a digit between 0 and 9.

11. Device according to claim 10, wherein each digit is represented multiple times in the grid (40).

12. Device according to claim 10, wherein each digit is represented only once in the grid (40).

13. Device according to one of claims 7 to 9, wherein the concealed data belong to a number of an identity card or passport of the holder of the card (1), which is inscribed on said card.
